# EUROPEAN PATENT SPECIFICATION

(11) **EP 4 276 995 B1**
(45) Date of publication and mention of the grant of the patent: **13.08.2025**
(21) Application number: 21917917.3
(22) Date of filing: 17.12.2021
(51) Int. Cl.: H01M 50/166, H01M 50/204, H01M 50/244, H01M 50/258, H01M 50/262, H01M 50/264

(54) **MULTI-BATTERY PACK HAVING COMPACT STRUCTURE**
MEHRFACHBATTERIEPACK MIT KOMPAKTER STRUKTUR
BLOC-BATTERIE MULTIPLE AYANT UNE STRUCTURE COMPACTE

(30) Priority: 08.01.2021 KR 20210002840
(43) Date of publication of application: 15.11.2023
(60) Divisional application: 25188822.8
(73) Proprietor: LG Energy Solution, Ltd., Seoul 07335 (KR)
(72) Inventor: JEONG, Han Yong, Daejeon 34122 (KR); SON, Young Su, Daejeon 34122 (KR); YANG, Kun Joo, Daejeon 34122 (KR)
(74) Representative: Goddar, Heinz J.
(86) International application number: PCT/KR2021/019271
(87) International publication number: WO 2022/149755

(56) References cited:
- EP-A1- 3 546 522
- CN-A- 106 654 097
- CN-U- 205 609 601
- CN-U- 205 609 601
- CN-U- 209 859 994
- CN-U- 210 640 283
- KR-A- 20060 114 549
- KR-B1- 101 523 588
- US-A1- 2006 267 545
- US-A1- 2007 141 459
- US-A1- 2017 005 384
- US-A1- 2017 263 903

## Description

### [Technical Field]

This application claims the benefit of priority to Korean Patent Application No. 2021-0002840 filed on January 8, 2021.

The present invention relates to a multi-battery pack configured such that a case frame of a battery pack includes a through-hole and a plurality of battery packs is fastened to each other by a long bolt inserted through the through-hole, whereby the multi-battery pack has a compact structure.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel-cadmium battery, a nickel-hydride battery, and a nickel-zinc battery as secondary batteries that are widely used at present. The operating voltage of a unit secondary battery cell, i.e. a unit battery cell, is about 2.0V to 5.0V. In the case in which output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

Although the battery pack is used alone, a multi-battery pack including a plurality of battery packs connected to each other in series or in parallel so as to correspond to a device that requires high capacity and high output, such as an electric vehicle, has been proposed.

In a conventional multi-battery pack, however, a separate bracket is necessary to mount the multi-battery pack to a device, whereby space is wasted and cost is increased.

In addition, a separate apparatus and a space therefor are necessary to fix a plurality of battery packs after the battery packs are stacked.

US 2007/0141459 A1 relates to a battery module where a plurality of assembled batteries are accommodated in an exterior case formed in an approximately hexahedral or cubic shape, each assembled battery including a plurality of cylindrical unit cells electrically connected such that polarities thereof are alternating. CN 205 609 601 U and US 2017/0005384 A1 relate to a battery modules for electric vehicles. CN 209 859 994 U relates to square aluminum shell battery double-layer module, which is used for various double-layer aluminum shell battery modules. US 2017 263 903 A1 concerns a battery pack which comprises at a battery module with a plurality of battery cells. US 2006/267545 A1 relates to a battery pack having increased safety and an overall compact structure.

### [Disclosure]

### [Technical Problem]

The present invention has been made in view of the above problems, and it is an object of the present invention to provide a multi-battery pack configured such that a case frame of a battery pack includes a through-hole and a plurality of battery packs is fastened to each other by a long bolt inserted through the through-hole, whereby the multi-battery pack has a compact structure.

### [Technical Solution]

In order to accomplish the above object, a multi-battery pack according to the present invention includes a plurality of stacked battery packs and a plurality of long bolts configured to couple the plurality of battery packs to each other and to fix the plurality of battery packs to a device, wherein each of the battery packs includes a plurality of battery cells and a case configured to receive the plurality of battery cells therein, the case includes a case frame defining a space configured to receive the battery cells therein, the case frame being provided at an outside thereof with a plurality of through-holes through which the long bolts are inserted, a lower cover coupled to a lower part of the case frame, and an upper cover coupled to an upper part of the case frame, and the upper cover includes a circular first fastening hole and a second fastening hole having one side open in a C-shape, the first fastening hole and the second fastening hole being configured to allow the long bolts to be fastened therethrough.

Also, in the multi-battery pack according to the present invention, the upper cover may further include a third fastening hole configured to allow the upper cover to be fastened to the case frame therethrough.

Also, in the multi-battery pack according to the present invention, the lower cover may be provided at positions thereof corresponding to the first fastening hole and the second fastening hole of the upper cover with an equal number of fastening holes having identical shapes.

Also, in the multi-battery pack according to the present invention, a hollow cylindrical bushing configured to prevent deformation of the case due to fastening of the long bolts is inserted into each of the through-holes.

Also, in the multi-battery pack according to the present invention, the bushing protrudes and extends upward from the upper cover to be inserted into the lower cover of the battery pack stacked thereon.

Also, in the multi-battery pack according to the present invention, the sum in number of the first fastening hole and the second fastening hole may be equal to the number of the through-holes of the case frame.

Also, in the multi-battery pack according to the present invention, the first fastening hole may be singly formed in the upper cover.

Also, in the multi-battery pack according to the present invention, the case frame may be formed by injection molding.

Also, in the multi-battery pack according to the present invention, the case frame may be injection-molded in the state in which the bushing is inserted therein.

In addition, the present invention provides a device including the multi-battery pack according to the present invention.

### [Advantageous Effects]

A multi-battery pack according to the present invention has an advantage in that through-holes are formed using extra corner spaces of a battery pack case, and battery packs are fastened to each other and at the same time are fastened to a device using long bolts, whereby no separate space and apparatus are necessary.

In addition, the multi-battery pack according to the present invention has an advantage in that an upper cover includes fastening holes having different shapes, whereby battery pack cases may be easily fastened to each other even though minute tolerance occurs between the battery pack cases.

### [Description of Drawings]

FIG. 1 is a front view schematically showing a multi-battery pack mounted to a device according to an embodiment of the present invention.
FIG. 2 is a perspective view showing a multi-battery pack according to an embodiment of the present invention.
FIG. 3 is a perspective view showing a battery pack according to an embodiment of the present invention.
FIG. 4 is a plan view showing an upper cover of a battery pack case according to an embodiment of the present invention.
FIG. 5 is a sectional view showing the multi-battery pack through which a long bolt according to an embodiment of the present invention is inserted.
FIG. 6 is a perspective view showing a portion of the battery pack into which a bushing according to an embodiment of the present invention is inserted.
FIG. 7 is a perspective view showing a multi-battery pack according to another embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a multi-battery pack according to the present invention will be described with reference to the accompanying drawings.

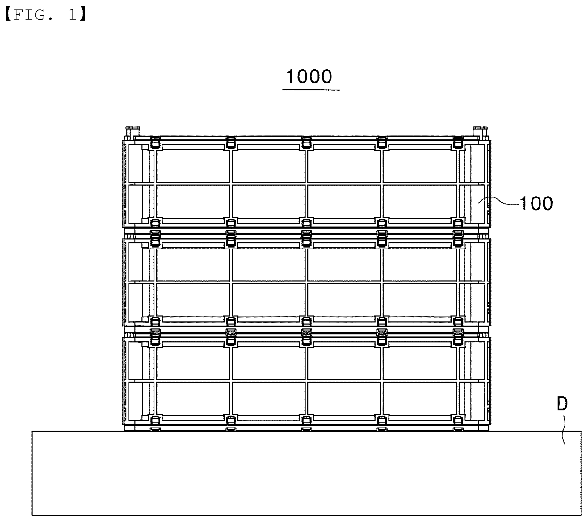

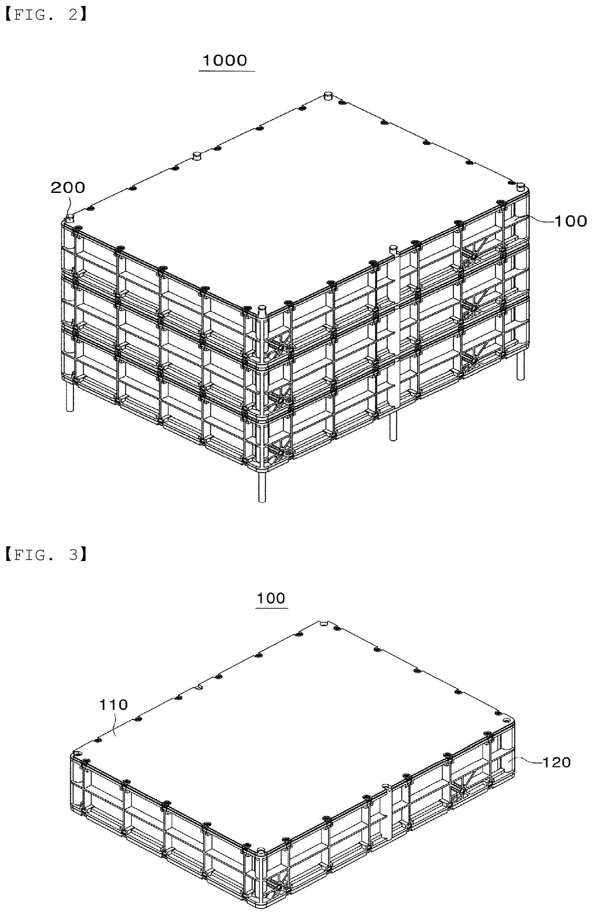

FIG. 1 is a front view schematically showing a multi-battery pack mounted to a device according to an embodiment of the present invention, and FIG. 2 is a perspective view showing a multi-battery pack according to an embodiment of the present invention.

When describing the multi-battery pack according to the present invention with reference to FIGS. 1 and 2, the multi-battery pack 1000 is formed by stacking a plurality of battery packs 100 and coupling the stacked battery packs 100 to each other using a long bolt 200.

The long bolt 200, which is configured to have a length greater than the overall height of the stacked battery packs 100, is inserted through the battery packs 100 to couple the battery packs 100 to each other and to fix the multi-battery pack 1000 to a device D, to which the multi-battery pack is mounted.

It is preferable for a plurality of long bolts 200 to be provided at the multi-battery pack 1000 in order to stably couple the battery packs 100 to each other and to fix the battery packs to the device D.

In the present invention, as shown in FIGS. 1 and 2, the case in which the long bolts are provided at corners and middle parts of long sides of the multi-battery pack is shown by way of example. However, the number of long bolts 200 is not limited thereto, and may be appropriately selected in consideration of the size or weight of the multi-battery pack.

In addition, the material for the long bolt 200 is not particularly restricted, and various known materials used in a battery pack manufacturing process may be used.

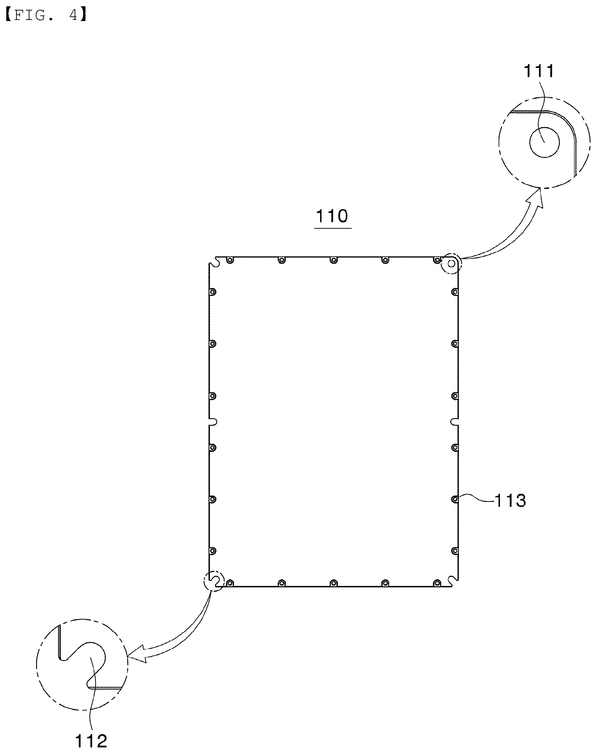

Meanwhile, FIG. 3 is a perspective view showing a battery pack according to an embodiment of the present invention, and FIG. 4 is a plan view showing an upper cover of a battery pack case according to an embodiment of the present invention.

When describing the battery pack 100 constituting the multi-battery pack 1000 according to the present invention with reference to FIGS. 3 and 4, the battery pack 100 includes a plurality of battery cells received in a case in a state of being connected to each other in series or in parallel and various kinds of components configured to protect and control the received battery cells.

The battery cell is generally manufactured through a process of receiving an electrode assembly, configured such that electrodes and separators are alternately stacked, in a case, injecting an electrolytic solution into the case, and hermetically sealing the case. The kind of the received battery cell is not particularly restricted. Any one of various known battery cells, such as a pouch-shaped battery cell, a cylindrical battery cell, and a prismatic battery cell, may be appropriately used as needed. Depending on circumstances, the plurality of battery cells may also be manufactured in the form of a battery module or a cell assembly so as to be received.

In addition, the case of the battery pack 100 mainly includes a case frame 120 defining a space in which the plurality of battery cells is received, a lower cover coupled to a lower part of the case frame 120, and an upper cover 110 coupled to an upper part of the case frame 120.

Here, the upper cover 110 includes a first fastening hole 111 and second fastening holes 112, through which the long bolts 200 are inserted, and third fastening holes 113, through which fastening means for coupling with the case frame 120 after the battery cells are received are inserted.

In the present invention, although not separately shown, the lower cover is also provided at positions thereof corresponding to the first fastening hole 111 and the second fastening holes 112 of the upper cover 110 with an equal number of fastening holes having identical shapes, through which the long bolts 200 are inserted.

In addition, fastening holes, through which fastening means for coupling with the case frame 120 are inserted, are also provided in the lower cover. The number or position of the fastening holes may be identical to the number or position of the fastening holes formed in the upper cover 110, or may be designed so as to be different from the number or position of the fastening holes formed in the upper cover depending on circumstances.

Next, through-holes, through which the long bolts 200 are inserted, are formed in the case frame 120 at positions corresponding to the first fastening hole 111 and the second fastening holes 112 in equal number.

The through-holes are formed using extra spaces of the case frame 120, such as inner corner spaces, whereby the through-holes are formed without an additional increase in size of the case frame 120, and therefore it is possible to prevent waste of a separate space necessary to form the multi-battery pack 1000.

In addition, fastening recesses are formed in the case frame 120 at positions corresponding to the third fastening holes 113, whereby the upper cover 110 and the lower cover may be coupled to the case frame 120 using fastening means, such as bolts. The shape of the fastening recesses may be appropriately selected depending on the fastening means applied thereto.

Meanwhile, as shown in FIG. 4, the first fastening hole 111 of the upper cover 110 is circular, and the long bolt 200 is inserted through the first fastening hole in order to fix the battery packs 100.

Even though identical battery pack cases are manufactured through identical processes using identical materials, however, minute tolerance may occur between the battery pack cases or between the upper and lower covers and the case frame 120 in each of the battery pack cases.

If all fastening holes of the upper cover, through which the long bolts 200 are inserted, are circular, like the first fastening hole 111, fastening may be difficult when the battery packs 100 are stacked to form the multi-battery pack 1000, or force higher than necessary may be applied for fastening, whereby deformation may occur.

If the size of the first fastening hole 111 is increased so as to be greater than necessary in order to prevent this problem, the upper cover 110 may be misaligned when the long bolt 200 is fastened.

In consideration of the above problems, the battery pack 100 according to the present invention is configured such that each second fastening hole 112 is formed in a C-shape such that one side of the second fastening hole is open to the outside so as to have an appropriate margin, unlike the first fastening hole 111, and therefore, it is possible to reduce tolerance between stacked battery packs 100.

It is preferable for the number of the first fastening hole 111 to be one such that the first fastening hole is formed in any one of the four corners of each upper cover 110, and it is preferable for the number of the second fastening holes 112 to be a number obtained by subtracting the number of the first fastening hole 111 from the total number of fastening holes necessary to fasten the long bolts 200.

Although the total number of the fastening holes formed in each upper cover 110 in order to fasten the long bolts 200 is not particularly restricted, the number of the fastening holes is equal to the number of the long bolts 200 used for the multi-battery pack 1000, and it is preferable for the fastening holes to be formed in at least the four corners of the upper cover one by one in order to securely fix the multi-battery pack 1000.

Of course, the fastening holes may be further formed in sides of the upper cover between the four corners in consideration of the size of the battery pack 100.

Meanwhile, pressure may be applied to the case frame 120 during fastening of the long bolts 200 inserted through the through-holes, whereby the case frame 120 may be deformed.

In order to prevent deformation of the case frame 120 due to fastening of the long bolts 200, a bushing may be inserted into each through-hole of the case frame 120.

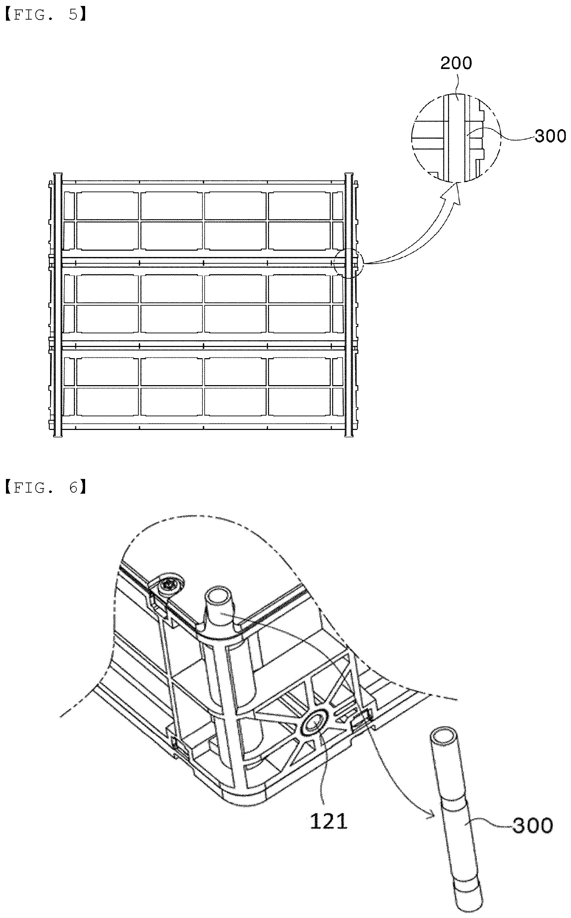

FIG. 5 is a sectional view showing the multi-battery pack through which a long bolt according to an embodiment of the present invention is inserted, and FIG. 6 is a perspective view showing a portion of the battery pack into which a bushing according to an embodiment of the present invention is inserted.

When describing the bushing according to the present invention with reference to FIGS. 5 and 6, a hollow cylindrical bushing 300 is inserted into each of the through-holes of each battery pack 100, through which the long bolts 200 are inserted.

That is, a bushing 300 having an outer diameter corresponding to the inner diameter of the through-hole and an inner diameter corresponding to the outer diameter of the long bolt 200, which is inserted through the bushing, is inserted into the through-hole, and the long bolt 200 is inserted into the inserted bushing 300.

It is preferable for the bushing 300 to have higher compressive stress than the case frame 120 in order to prevent deformation of the case frame 120 due to fastening of the long bolt 200.

In addition, although the bushing 300 is capable of preventing deformation of the case frame 120 due to fastening of the long bolt 200 even in the case in which the length of the bushing is equal to the length of the through-hole of the case frame, the length of the bushing is greater than the length of the through-hole such that a portion of the bushing protrudes upwards from the upper cover 110, as shown in FIG. 6.

The portion of the bushing 300 protruding as described above is inserted into a fastening hole of a lower cover of a battery pack 100 stacked thereon, whereby a predetermined level of fixing force is provided even before fastening of the long bolt 200, and the bushing aligns the positions of the battery packs 100 such that subsequent fastening of the long bolt 200 is easily performed.

That is, when described based on one battery pack 100, one end of the inserted bushing 300 is located at a lower part of the through-hole, a portion of the other end of the bushing protrudes and extends upward from the upper cover 110, the bushing 300 is not inserted into the fastening hole of the lower cover, and the protruding bushing 300 of the battery pack 100 located on the lower side when the battery packs 100 are stacked is inserted into the fastening hole of the lower cover.

The bushing 300 may be manufactured independent of the case frame 120 depending on the material for the case frame 120 and a method of forming the case frame, and may be inserted into the through-hole of the case frame 120 after the case frame is formed, or may be inserted into the case frame 120 during manufacture of the case frame in order to form the case frame 120 having the bushing 300 inserted therein.

For example, in the case in which the case frame 120 is formed through an injection molding method using plastic, a pre-manufactured bushing 300 may be inserted in advance during injection molding in order to form the case frame 120.

Meanwhile, a bushing 300 is inserted into each through-hole of the case frame 120 in order to prevent deformation of the case. However, an appropriate number of bushings may be selected based on the number of through-holes. Even at this time, however, it is preferable for the bushings to be inserted into at least four corners of the case frame 120.

Although the multi-battery pack 1000 according to the present invention may be mounted to the device D, as shown in FIG. 1, the multi-battery pack may be mounted in various forms and directions depending on the environment of the device D to which the multi-battery pack is mounted.

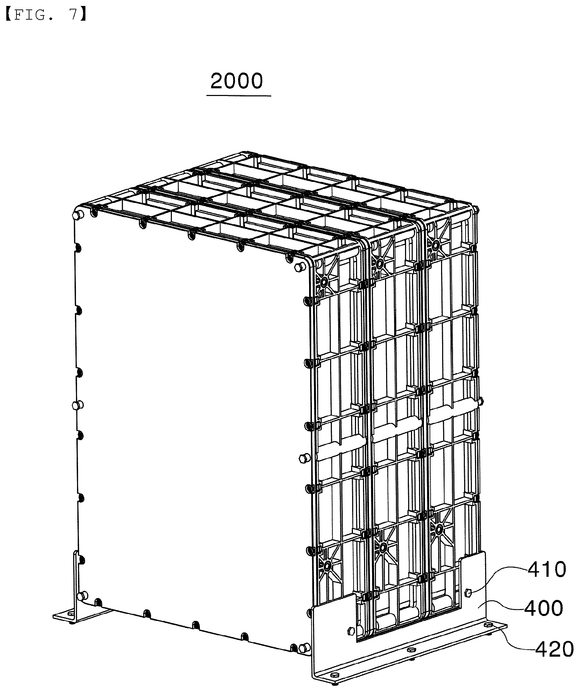

FIG. 7 is a perspective view showing a multi-battery pack according to another embodiment of the present invention.

The multi-battery pack 2000 of FIG. 7 is a vertical form of the multi-battery pack 1000 of FIG. 1. In the case in which the multi-battery pack 2000 is mounted to the device D, as shown, it is impossible to directly fix the multi-battery pack to the device D using the long bolts 200.

Consequently, an additional fixing bracket 400 is necessary to fix the multi-battery pack 2000 to the device D.

One side of the fixing bracket 400 of FIG. 7 is fixed to the multi-battery pack 2000 through a first fixing means 410, and the other side of the fixing bracket is fixed to the device D through a second fixing means.

Various known mechanical fastening means, such as a screw, may be used as the first fixing means 410 and the second fixing means 420.

Meanwhile, as shown in FIG. 6, a fixing means insertion port 121, through which the first fixing means 410 is inserted, is formed in the case frame 120.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### (Description of Reference Symbols)

- 1000, 2000:: Multi-battery packs
- 100:: Battery pack
- 110:: Upper cover
- 111:: First fastening hole
- 112:: Second fastening hole
- 113:: Third fastening hole
- 120:: Case frame
- 121:: Fixing means insertion port
- 131:: Protrusion
- 200:: Long bolt
- 300:: Bushing
- 400:: Fixing bracket
- 410:: First fixing means
- 420:: Second fixing means
- D:: Device

## Claims

1. A multi-battery pack (1000, 2000) comprising:
a plurality of stacked battery packs (100); and
a plurality of long bolts (200) configured to couple the plurality of battery packs (100) to each other and to fix the plurality of battery packs (100) to a device (D),
wherein each of the battery packs (100) comprises a plurality of battery cells and a case configured to receive the plurality of battery cells therein,
wherein the case comprises:
a case frame (120) defining a space configured to receive the battery cells therein, the case frame (120) being provided at an outside thereof with a plurality of through-holes through which the long bolts (200) are inserted;
a lower cover coupled to a lower part of the case frame (120); and
an upper cover (110) coupled to an upper part of the case frame (120), and
wherein the upper cover (110) comprises a circular first fastening hole (111) and a second fastening hole (112) having one side open in a C-shape, the first fastening hole (111) and the second fastening hole (112) being configured to allow the long bolts (200) to be fastened therethrough, wherein a hollow cylindrical bushing (300) configured to prevent deformation of the case due to fastening of the long bolts (200) is inserted into each of the through-holes, and wherein the bushing (300) protrudes and extends upward from the upper cover (110) to be inserted into the lower cover of the battery pack (100) stacked thereon.

2. The multi-battery pack (1000, 2000) according to claim 1, wherein the upper cover (110) further comprises a third fastening hole (113) configured to allow the upper cover (110) to be fastened to the case frame (120) therethrough.

3. The multi-battery pack (1000, 2000) according to claim 2, wherein the lower cover is provided at positions thereof corresponding to the first fastening hole (111) and the second fastening hole (112) of the upper cover (110) with an equal number of fastening holes (111, 112, 113) having identical shapes.

4. The multi-battery pack (1000, 2000) according to claim 1, wherein a sum in number of the first fastening hole (111) and the second fastening hole (112) is equal to a number of the through-holes of the case frame (120).

5. The multi-battery pack (1000, 2000) according to claim 4, wherein the first fastening hole (111) is singly formed in the upper cover (110).

6. The multi-battery pack (1000, 2000) according to one of the preceding claims, wherein the case frame (120) is formed by injection molding.

7. The multi-battery pack (1000, 2000) according to claim 6, wherein the case frame (120) is injection-molded in a state in which the bushing (300) is inserted therein.

8. A device (D) comprising the multi-battery pack (1000, 2000) according to any one of claims 1 to 7.

## Patentansprüche

1. Ein Multi-Batterie-Pack (1000, 2000), umfassend:
eine Vielzahl gestapelter Batteriepacks (100); und
eine Vielzahl langer Bolzen (200), die dazu ausgelegt sind, die Vielzahl von Batteriepacks (100) miteinander zu verbinden und die Vielzahl von Batteriepacks (100) an einer Vorrichtung (D) zu befestigen,
wobei jedes der Batteriepacks (100) eine Vielzahl von Batteriezellen und ein Gehäuse umfasst, das zum Aufnehmen der Vielzahl von Batteriezellen ausgelegt ist,
wobei das Gehäuse umfasst:
einen Gehäuserahmen (120), der einen Raum definiert, der dazu ausgelegt sind, die Batteriezellen darin aufzunehmen, wobei der Gehäuserahmen (120) an seiner Außenseite mit einer Vielzahl von Durchgangslöchern versehen ist, durch die die langen Bolzen (200) eingesetzt sind;
eine untere Abdeckung, die mit einem unteren Teil des Gehäuserahmens (120) verbunden ist; und
eine obere Abdeckung (110), die mit einem oberen Teil des Gehäuserahmens (120) verbunden ist, und
wobei die obere Abdeckung (110) ein kreisförmiges erstes Befestigungsloch (111) und ein zweites Befestigungsloch (112) mit einer C-förmig offenen Seite umfasst, wobei das erste Befestigungsloch (111) und das zweite Befestigungsloch (112) dazu ausgelegt sind, dass die langen Bolzen (200) durch sie hindurch befestigbar sind, wobei eine hohle zylindrische Buchse (300), die dazu ausgelegt ist, eine Verformung des Gehäuses aufgrund der Befestigung der langen Bolzen (200) verhindert, in jedes der Durchgangslöcher eingesetzt ist, und wobei die Buchse (300) aus der oberen Abdeckung (110) hervorsteht und sich nach oben erstreckt, um in die untere Abdeckung des darauf gestapelten Batteriepacks (100) eingesetzt zu werden.

2. Multi-Batterie-Pack (1000, 2000) nach Anspruch 1, wobei die obere Abdeckung (110) ferner ein drittes Befestigungsloch (113) aufweist, das dazu ausgelegt sind, dass die obere Abdeckung (110) durch dieses hindurch an dem Gehäuserahmen (120) befestigbar ist.

3. Multi-Batterie-Pack (1000, 2000) nach Anspruch 2, wobei die untere Abdeckung an Positionen, die dem ersten Befestigungsloch (111) und dem zweiten Befestigungsloch (112) der oberen Abdeckung (110) entsprechen, mit einer gleichen Anzahl von Befestigungslöchern (111, 112, 113) mit identischen Formen versehen ist.

4. Multi-Batterie-Pack (1000, 2000) nach Anspruch 1, wobei die Summe der Anzahl des ersten Befestigungslochs (111) und des zweiten Befestigungslochs (112) gleich der Anzahl der Durchgangslöcher des Gehäuserahmens (120) ist.

5. Multi-Batterie-Pack (1000, 2000) nach Anspruch 4, wobei das erste Befestigungsloch (111) einmalig in der oberen Abdeckung (110) ausgebildet ist.

6. Multi-Batterie-Pack (1000, 2000) nach einem der vorhergehenden Ansprüche, wobei der Gehäuserahmen (120) durch Spritzgießen gebildet ist.

7. Multi-Batterie-Pack (1000, 2000) nach Anspruch 6, wobei der Gehäuserahmen (120) in einem Zustand spritzgegossen ist, in dem die Buchse (300) darin eingesetzt ist.

8. Vorrichtung (D) mit dem Multi-Batterie-Pack (1000, 2000) nach einem der Ansprüche 1 bis 7.

## Revendications

1. Bloc-batterie multiple (1000, 2000) comprenant :
une pluralité de blocs-batteries empilés (100) ; et
une pluralité de boulons longs (200) configurés pour coupler la pluralité de blocs-batteries (100) les uns aux autres et pour fixer la pluralité de blocs-batteries (100) à un dispositif (D),
dans lequel chacun des blocs-batteries (100) comprend une pluralité d'éléments de batterie et un boîtier configuré pour y recevoir la pluralité d'éléments de batterie,
dans lequel le boîtier comprend :
un cadre de boîtier (120) définissant un espace configuré pour y recevoir les éléments de batterie, le cadre de boîtier (120) étant muni sur son extérieur d'une pluralité de trous traversants à travers lesquels les boulons longs (200) sont introduits ;
un couvercle inférieur couplé à une partie inférieure du cadre de boîtier (120) ; et
un couvercle supérieur (110) couplé à une partie supérieure du cadre de boîtier (120), et
dans lequel le couvercle supérieur (110) comprend un premier trou de fixation circulaire (111) et un deuxième trou de fixation (112) ayant un côté ouvert en forme de "C", le premier trou de fixation (111) et le deuxième trou de fixation (112) étant configurés pour permettre aux boulons longs (200) d'y être fixés, dans lequel un manchon cylindrique creux (300) configuré pour éviter la déformation du boîtier due à la fixation des boulons longs (200) est introduit dans chacun des trous traversants, et dans lequel le manchon (300) dépasse et s'étend vers le haut depuis le couvercle supérieur (110) pour être introduit dans le couvercle inférieur du bloc-batterie (100) y étant empilé.

2. Bloc-batterie multiple (1000, 2000) selon la revendication 1, dans lequel le couvercle supérieur (110) comprend en outre un troisième trou de fixation (113) configuré pour permettre au couvercle supérieur (110) d'être fixé au cadre de boîtier (120) par celui-ci.

3. Bloc-batterie multiple (1000, 2000) selon la revendication 2, dans lequel le couvercle inférieur est fourni à des positions correspondant au premier trou de fixation (111) et au deuxième trou de fixation (112) du couvercle supérieur (110) avec un nombre égal de trous de fixation (111, 112, 113) ayant des formes identiques.

4. Bloc-batterie multiple (1000, 2000) selon la revendication 1, dans lequel une somme en nombre du premier trou de fixation (111) et du deuxième trou de fixation (112) est égale à un nombre des trous traversants du cadre de boîtier (120).

5. Bloc-batterie multiple (1000, 2000) selon la revendication 4, dans lequel le premier trou de fixation (111) est formé d'un seul tenant dans le couvercle supérieur (110).

6. Bloc-batterie multiple (1000, 2000) selon l'une quelconque des revendications précédentes, dans lequel le cadre de boîtier (120) est formé par moulage par injection.

7. Bloc-batterie multiple (1000, 2000) selon la revendication 6, dans lequel le cadre de boîtier (120) est moulé par injection dans un état dans lequel le manchon (300) y est introduit.

8. Dispositif (D) comprenant le bloc-batterie multiple (1000, 2000) selon l'une quelconque des revendications 1 à 7.
